# EUROPEAN PATENT SPECIFICATION

(11) **EP 2 503 816 B1**
(45) Date of publication and mention of the grant of the patent: **23.10.2013**
(21) Application number: 10831136.6
(22) Date of filing: 18.11.2010
(51) Int. Cl.: H04W 24/06, H04L 12/24, H04L 12/26, H04L 29/06, H04L 12/54, H04W 24/00

(54) **METHOD AND APPARATUS FOR MONITORING SERVICE QUALITY**
VERFAHREN UND VORRICHTUNG ZUR DIENSTQUALITÄTSÜBERWACHUNG
PROCÉDÉ ET APPAREIL DE SURVEILLANCE DE LA QUALITÉ D'UN SERVICE

(30) Priority: 18.11.2009 CN 200910222152
(43) Date of publication of application: 26.09.2012
(73) Proprietor: Huawei Technologies Co., Ltd., Shenzhen, Guangdong 518129 (CN)
(72) Inventor: ZHENG, Guodong, Shenzhen Guangdong 518129 (CN); CHEN, Minggong, Shenzhen Guangdong 518129 (CN); LIANG, Yiye, Shenzhen Guangdong 518129 (CN); YING, Jian, Shenzhen Guangdong 518129 (CN)
(74) Representative: Thun, Clemens
(86) International application number: PCT/CN2010/078857
(87) International publication number: WO 2011/060721

(56) References cited:
- WO-A1-2006/085053
- CN-A- 1 777 213
- CN-A- 101 562 831
- CN-A- 101 702 811
- US-A1- 2009 061 860

## Description

### FIELD OF THE INVENTION

The present invention relates to mobile communication technologies, and in particular to a method and an apparatus for monitoring service quality.

### BACKGROUND OF THE INVENTION

In the field of mobile core networks, with the introduction of mobile softswitch and Internet Protocol (IP) bearer network technologies that are more suitable for future evolution, the networking tends to be increasingly flattened. A fault occurring in any node impacts the entire network, such that the failure rate of the network is soaring up and higher requirements are imposed on the operation and maintenance (O&M) system. For example, the O&M system needs to not only verify the connectivity of services but also the goodness of the quality of services. A manual service quality monitoring solution may be adopted but the efficiency is very low. Currently, there are the following several method for monitoring service quality. In a first prior art, the bearer network is monitored passively, where a network element tests, according to a preset IP address pair, running services through sampling and reports the Quality of Service (QoS) of the IP address pair to the network manager for statistics. In a second prior art, an external probe system is deployed in the network. The probe system initiates dialing test calls and numbers the end offices under test. A network element between the probe system and an end office under test performs routing and addressing configuration according to the number of the end office under test so as to establish an IP bearer between the probe system and the end office under test. The probe system sends call service packets to the end office under test and receives call service packets returned by the end office under test, and compares the sent call service packets and the received call service packets to obtain the quality of the network. In a third prior art, in the field of data communications, software is embedded in a router to monitor the IP bearer network inside a corporate network through a private protocol.

The prior art has the following disadvantages: In the first prior art, the QoS of a bearer network is monitored but the relation between services and the QoS of a bearer network is not clear. Whether the service quality is good or bad does not merely depend on the quality of the bearer network. Moreover, the monitoring method is passive so that the quality of the bearer network is known only after a service failure. Therefore, the method cannot play a role of pre-alert. In the third prior art, a router on the IP bearer network executes the monitoring through a private protocol and therefore the range of application is limited. The second prior art is better among the prior arts but requires an external device, which invites security risks to the network. Moreover, the monitored path is not the path between two end offices but the path between the probe system and an end office. In addition, the second prior art monitors network quality which is still different from the service quality. In one word, the monitoring solutions in the prior arts are all undesirable.

US 2009/0061860 A1 discloses a method and a device for facilitating roaming tests for a host network. Roaming tests include creating a fake profile via a gateway associated with a host network for a roaming subscriber and simulating services with other network elements.

Further, WO 2006/085053 A1 discloses the idea of placing a test device within a coverage area of a plurality of mobile communication networks and testing whether the device is able to register with the different communication networks.

### SUMMARY OF THE INVENTION

Embodiments of the present invention provide a method and an apparatus for monitoring service quality so as to implement the monitoring of service quality.

An embodiment of the present invention provides a method for monitoring service quality, including:
receiving a dialing test number list sent by a network management system and performing interaction of simulating an actual service with a destination end corresponding to a dialing test number in the dialing test number list;
detecting service quality when a service packet of the simulated actual service is transmitted; and
sending the service quality to the network management system;
wherein the performing the interaction of simulating the actual service with the destination end corresponding to the dialing test number in the dialing test number list comprises:
setting up a signaling connection with the destination end corresponding to the dialing test number in the dialing test number list;
setting up a service bearer with the destination end after the signaling connection is successfully set up; and
exchanging service packets with the destination end over the service bearer;
wherein the detecting the service quality when the service packet of the simulated actual service is transmitted comprises:
generating a first service packet and sending the first service packet to the destination end over the service bearer so as to enable the destination end to obtain first network impairment information when the first service packet is transmitted over the service bearer after receiving the first service packet and to calculate first service quality according to the first network impairment information;
obtaining the first service quality from the destination end through Real-time Transport Control Protocol (RTCP); and
receiving a second service packet generated by the destination end and sent by the destination end over the service bearer;
obtaining second network impairment information when the second service packet is transmitted over the service bearer after receiving the second service packet, and calculating second service quality according to the second network impairment information;
and wherein the sending the service quality to the network management system comprises: sending the first service quality and the second service quality to the network management system.

An embodiment of the present invention provides an apparatus for monitoring service quality, including:
an actual service simulating module, configured to receive a dialing test number list sent by a network management system and perform interaction of simulating an actual service with a destination end corresponding to a dialing test number in the dialing test number list;
a service quality detecting module, configured to detect service quality when a service packet of the simulated actual service is transmitted; and
a service quality reporting module, configured to send the service quality to the network management system;
wherein the actual service simulating module comprises:
a first unit, configured to set up a signaling connection with the destination end corresponding to the dialing test number in the dialing test number list;
a second unit, configured to set up a service bearer with the destination end after the signaling connection is successfully set up; and
a third unit, configured to exchange service packets with the destination end over the service bearer;
wherein the service quality detecting module is configured to
generate a first service packet, and send the first service packet to the destination end over the service bearer so as to enable the destination end to obtain first network impairment information when the first service packet is transmitted over the service bearer after receiving the first service packet and to calculate first service quality according to the first network impairment information; and obtain the first service quality from the destination end through Real-time Transport Control Protocol (RTCP);
receive a second service packet generated by the destination end and sent by the destination end over the service bearer, obtain second network impairment information when the second service packet is transmitted over the service bearer after receiving the second service packet, and calculate second service quality in a direction from the destination end to the apparatus according to the second network impairment information;
and wherein the service quality reporting module is configured to send the first and second service quality to the network management system.

According to the foregoing technical solutions, in the embodiments of the present invention, the simulated actual service is interacted so that the corresponding service quality is detected as accurately as possible.

### BRIEF DESCRIPTION OF THE DRAWINGS

FIG. 1 is a schematic flowchart of a method according to a first embodiment of the present invention;
FIG. 2 is a schematic flowchart of a method for detecting service quality in the sending direction according to an embodiment of the present invention;
FIG. 3 is a schematic flowchart of a method for detecting service quality in the receiving direction according to an embodiment of the present invention;
FIG. 4 is a schematic flowchart of a method according to a second embodiment of the present invention;
FIG. 5 is a schematic structural diagram of a corresponding network according to the second embodiment of the present invention;
FIG. 6 is a schematic structural diagram of an apparatus according to a third embodiment of the present invention; and
FIG. 7 is a schematic structural diagram of an apparatus according to a fourth embodiment of the present invention.

### DETAILED DESCRIPTION OF THE EMBODIMENTS

The technical solutions of the present invention are described in detail with reference to the accompanying drawings and embodiments.

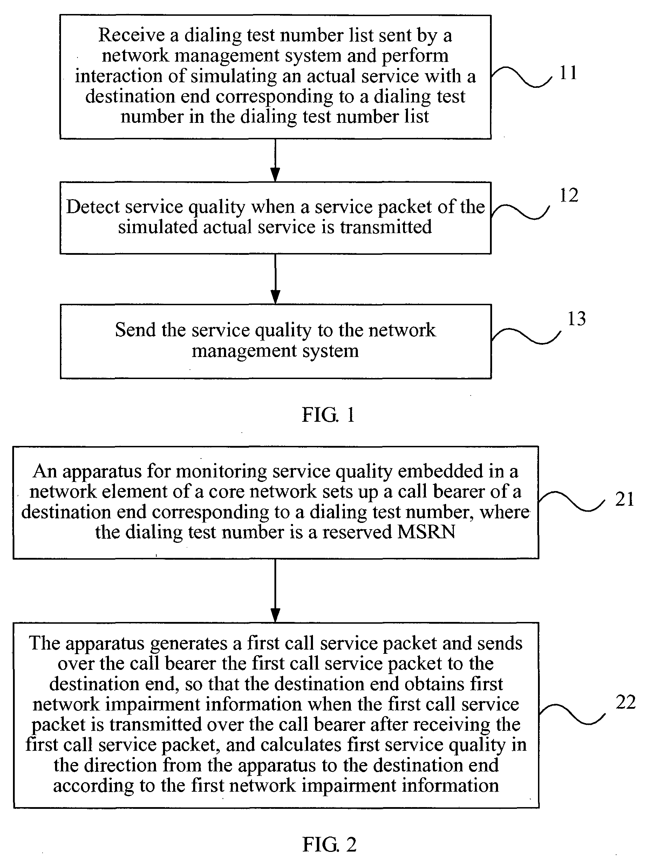

FIG. 1 is a schematic flowchart of a method according to a first embodiment of the present invention. The method includes the following steps:
Step 11: Receive a dialing test number list sent by a network management system and perform interaction of simulating an actual service with a destination end corresponding to a dialing test number in the dialing test number list, where
   the dialing test number in the dialing test number list may be a reserved Mobile Station Roaming Number (MSRN).

Because the MSRN is a temporary number allocated by an end office internally for addressing the callee, when the MSRN is used as a dialing test number, data configuration for addressing the callee does not need to be re-performed in end offices that the service passes through, which reduces the workload. To avoid confliction with normal roaming services, reserved MSRNs, for example, MSRNs ending with 999, may be used as dialing test numbers, where
one end office matches one dialing test number. For one source end, dialing test numbers of multiple destination ends may be configured so that calls to the multiple destination ends can be initiated simultaneously.

The mapping relation between dialing test numbers and end offices includes but is not limited to that shown in Table 1.

**Table 1**

| **End office** | **Dialing test number** |
|---|---|
| Beijing | 86139001999 |
| Guangzhou | 86139010999 |
| Shanghai | 86139020999 |
| Xi'an | 86139029999 |
| Wuhan | 86139027999 |

Step 12: Detect service quality when a service packet of the simulated actual service is transmitted.

Because an apparatus generates service packets actively instead of obtaining service packets by sampling services actually happened, active monitoring of the IP bearer network path may be implemented. That is, a service packet corresponding to a specific service may be generated and sent to the destination end before the specific service happens, so as to obtain the corresponding service quality, to know the service quality in advance and to implement pre-alert.

Step 13: Send the service quality to the network management system.

The network management system may obtain the service quality of each service path. When originating test offices are deployed in the entire network, active monitoring of the service quality on the entire network may be implemented.

The executing entity of the embodiment may be an apparatus embedded in a network element of a core network.

According to the embodiment, actual services are simulated for the measurement of service quality instead of only the network quality. Initiating interaction of simulating an actual service with the destination end may enable active service quality measurement and play a role of pre-alert. Further, an apparatus for monitoring service quality is embedded in a network element of a core network to execute related monitoring operations and therefore no new monitoring device is required, which avoids security risks and reduces the cost of maintenance. In addition, actual service paths are monitored instead of paths between the newly-introduced monitoring device and the destination ends, so as to guarantee the accuracy of monitoring. Using reserved MSRNs as dialing test numbers may reduce the workload.

The method in the embodiment of the present invention may detect service quality in both the sending and receiving directions.

FIG. 2 is a schematic flowchart of a method for detecting service quality in the sending direction according to an embodiment of the present invention. The method includes:
Step 21: An apparatus for monitoring service quality embedded in a network element of a core network sets up a call bearer of a destination end corresponding to a dialing test number, where the dialing test number is a reserved MSRN.
Step 22: The apparatus generates a first call service packet and sends over the call bearer the first call service packet to the destination end, so that the destination end obtains first network impairment information when the first call service packet is transmitted over the call bearer after receiving the first call service packet, and calculates first service quality in the direction from the apparatus to the destination end according to the first network impairment information.

Later, the destination end may send the first service quality to the apparatus over Real-time Transport Control Protocol (RTCP), where
the network impairment information includes QoS (including delay, packet loss, and jitter), speech encoding and decoding parameters, and sound control parameters. Then, the destination end may use an E-Model algorithm to calculate a Mean of Score (MOS) of the network service quality according to the network impairment information and use the MOS to evaluate the corresponding service quality.

According to the embodiment, actual services are simulated for the measurement of service quality instead of only the network quality. An apparatus for monitoring service quality is embedded in a network element of a core network to execute related monitoring operations and therefore no new monitoring device is required, which avoids security risks and reduces the cost of maintenance. Furthermore, actual service paths are monitored instead of paths between the newly-introduced monitoring device and the destination ends, so as to guarantee the accuracy of monitoring. Using reserved MSRNs as dialing test numbers may also reduce the workload. The apparatus for monitoring service quality generates call service packets actively to implement active monitoring and failure pre-alert mechanism. The method in the embodiment is not limited to a private protocol and may be implemented through a general protocol, thereby avoiding the limited application caused by the private protocol. By sending service packets to the destination end, the method may measure the service quality in the sending direction.

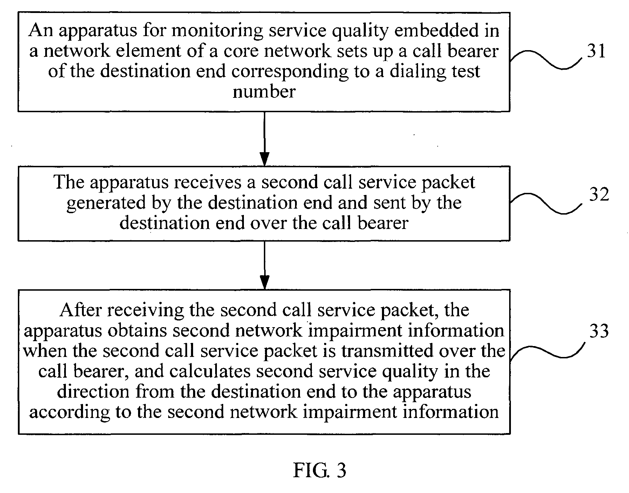

FIG. 3 is a schematic flowchart of a method for detecting service quality in the receiving direction according to an embodiment of the present invention. The method includes the following steps:
Step 31: An apparatus for monitoring service quality embedded in a network element of a core network sets up a call bearer of the destination end corresponding to a dialing test number, where the dialing test number is a reserved MSRN.
Step 32: The apparatus receives a second call service packet generated by a destination end and sent by a destination end over the call bearer.
Step 33: After receiving the second call service packet, the apparatus obtains second network impairment information when the second call service packet is transmitted over the call bearer, and calculates second service quality in the direction from the destination end to the apparatus according to the second network impairment information, where
   the network impairment information includes QoS (including delay, packet loss, and jitter), speech encoding and decoding parameters, and sound control parameters. Then, the apparatus may use an E-Model algorithm to calculate a Mean of Score (MOS) of the network service quality according to the network impairment information and use the MOS to evaluate the corresponding service quality.

According to the embodiment of the present invention, actual services are simulated for the measurement of service quality instead of only the network quality. An apparatus for monitoring service quality is embedded in a network element of a core network to execute related monitoring operations and therefore no new monitoring device is required, which avoids security risks and reduces the cost of maintenance. Furthermore, actual service paths are monitored instead of paths between the newly-introduced monitoring device and the destination ends, so as to guarantee the accuracy of monitoring. Using reserved MSRNs as dialing test numbers may also reduce the workload. The apparatus for monitoring service quality generates call service packets actively to implement active monitoring and failure pre-alert mechanism. The method in the embodiment of the present invention is not limited to a private protocol and may be implemented through a general protocol, thereby avoiding the limited application caused by the private protocol. By receiving service packets sent by the destination end, the method may measure the service quality in the receiving direction.

In practice, the foregoing apparatus may be embedded in a corresponding network element of the core network according to the specific network structure. In the following embodiments of the present invention, the foregoing apparatus for monitoring service quality is located in a media gateway (MGW) as an example to implement monitoring of the setup of a bearer plane and service quality. In addition, in the following embodiments of the present invention, a Mobile Switch Central Server (MSC server) is also included to set up control signaling connections, thereby implementing the measurement of not only the bearer plane but also the control signaling plane.

To implement uniform management, a network management system may initiate a dialing test command and perform statistical analysis finally. In addition, to differentiate the sending and receiving paths, the RTCP may be enabled when a bearer is set up.

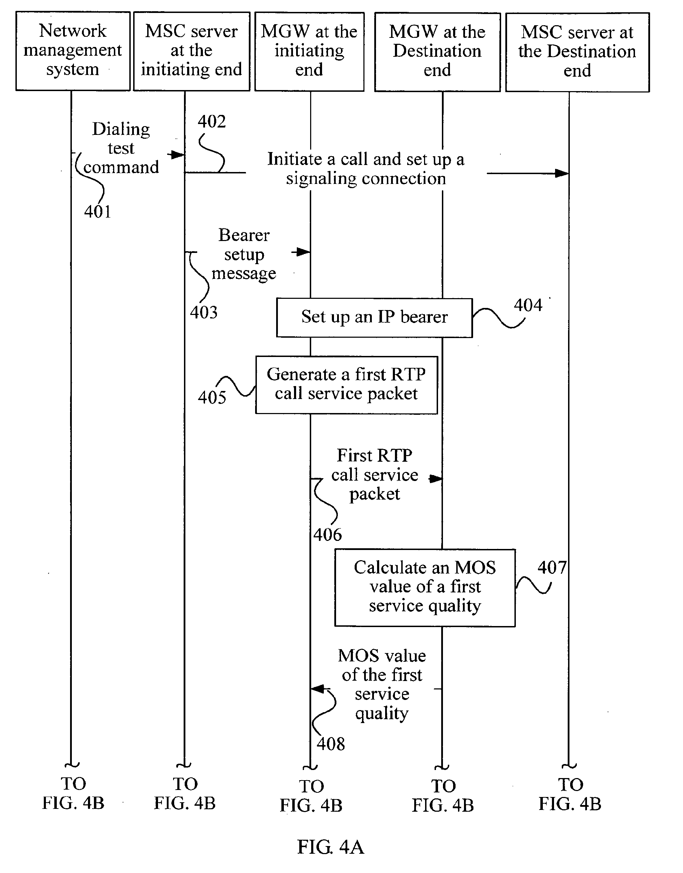

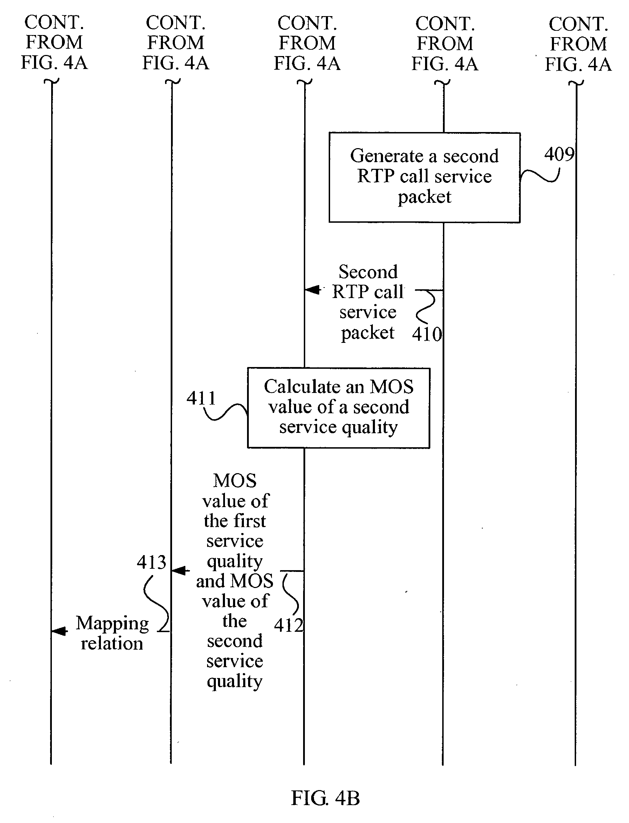

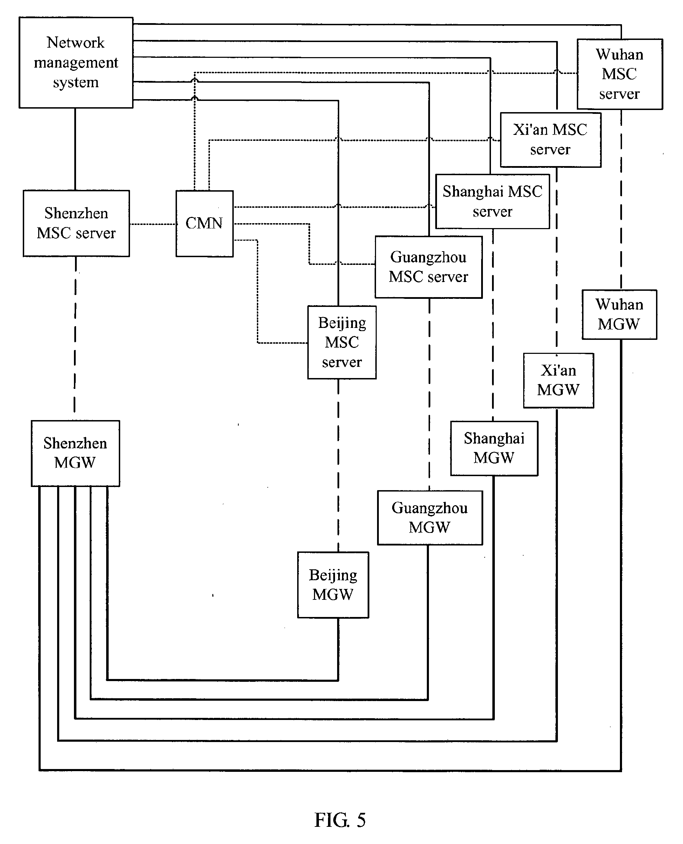

FIG. 4 is a schematic flowchart of a method according a second embodiment of the present invention. FIG. 5 is a schematic structural diagram of a corresponding network according to the second embodiment of the present invention. The method includes the following steps:
Step 401: A network management system sends a dialing test command to the MSC server at the monitoring initiating end, where the dialing test command carries a dialing test number list which includes one or more than two dialing test numbers. In FIG. 5, the initiating end is "Shenzhen".

An entire-network dialing test number list may be preset in the network management center, where one softswitch office matches a unique dialing test number. The dialing test number list stores mapping relations between the monitoring initiating end and the destination ends. A destination end may be identified by a reserved MSRN. When active monitoring is required, the network management system sets up a dialing test task and sends a dialing test command to the monitoring initiating end specified in the dialing test task, where the dialing test command carries the dialing test number of the destination end corresponding to the monitoring initiating end.

Step 402: After receiving the dialing test command, the MSC server at the initiating end initiates a call to the MSC server at the destination end and sets up a signaling connection so as to perform interaction of simulating an actual service. In FIG. 5, the destination ends include "Beijing", "Guangzhou", "Shanghai", "Xi'an", and "Wuhan".

Step 403: After a signaling connection is successfully set up, the MSC server at the initiating end sends a bearer setup message to the MGW at the initiating end, where the message carries an IP address of the MGW at the destination end, to instruct the MGW at the initiating end and the MGW at the destination end to set up an IP bearer.

Through the signaling connection, the put-through rate may be detected.

Step 404: The MGW at the initiating end and the MGW at the destination end set up an IP bearer as a call bearer through Real Transport Protocol (RTP) and RTCP, where
the MGW at the initiating end and the MGW at the destination end may set up the IP bearer according to the bearer setup messages sent by their respective corresponding MSC servers.

Step 405: After the bearer is successfully set up, the MGW at the initiating end generates a first RTP call service packet, where
the MGW at the initiating end may generate, according to preset information, an RTP call service packet corresponding to the speech service to be detected.

Step 406: The MGW at the initiating end sends the generated first RTP call service packet to the MGW at the destination end.

Step 407: The MGW at the destination end obtains, according to RTCP, first network impairment information when the first call service packet is transmitted over the call bearer and calculates an MOS value of first service quality according to the first network impairment information, where
the network impairment information includes QoS (including delay, packet loss, and jitter), speech encoding and decoding parameters, and sound control parameters. Then, the MGW at the destination end may use an E-Model algorithm to calculate a Mean of Score (MOS) of the network service quality according to the network impairment information and uses the MOS to evaluate the corresponding service quality. In the prior art for measuring service performance, usually the network impairment information and the E-Model algorithm are also used to obtain the corresponding MOS value. Therefore, the obtaining of the foregoing network impairment information and the calculation of the MOS according to the network impairment information may be implemented by applying the prior art and are not within the concerned range of the present invention.

In practice, the simulation of actual speech services should be as accurate as possible and factors unrelated to monitoring should be screened. For example, access authentication, interaction with the Home Location Register (HLR), and interaction with the Service Control Point (SCP) should be disabled.

Step 408: The MGW at the destination end sends the calculated MOS value of the first service quality to the MGW at the initiating end through RTCP.

Step 409: After the bearer is successfully set up, the MGW at the destination end generates a second RTP call service packet.

Step 410: The MGW at the destination end sends the generated second RTP call service packet to the MGW at the initiating end.

Step 411: The MGW at the initiating end obtains, according to RTCP, second network impairment information when the second call service packet is transmitted over the call bearer and calculates an MOS value of second service quality according to the second network impairment information.

The QoS in the sending and receiving directions may be obtained respectively according to RTCP and the IP address pair, and thereby the MOS values in the sending and receiving directions may be calculated, which solve the problem that a failure in the sending path cannot be differentiated from a failure in the receiving path due to obtaining network quality by comparing the sent call service packet with the received call service packet in loopback measurement in the prior art.

Steps 405 to 408 and steps 409 to 411 are not restricted by time sequence.

Step 412: The MGW at the initiating end sends the MOS value of the first service quality and the MOS value of the second service quality to the MSC server at the initiating end.

In order to transmit the MOS values, it is necessary to extend the interface between the MSC server and the MGW and the H.248 protocol used on the interface, so that the MOS values may be carried or transmitted.

Step 413: The MSC server at the initiating end sends mapping relations among the path information, MOS values, QoS, and put-through rate to the network management system. Then, the network management system may perform, according to the relation between dialing test numbers and service paths, statistical analysis on the test data results (MOS and QoS) reported by the MSC server to obtain the speech quality of each service path.

The path information may be determined according to an IP address pair and a dialing test number. The IP address pair is used to determine the direction and the dialing test number is used to determine the destination end. The foregoing mapping relations include but are not limited to those shown in Table 2.

**Table 2**

| **Service Path** | **Put-thr ough Rate** | **MOS** | **Sending direction** | | | **Receiving Direction** | | |
|---|---|---|---|---|---|---|---|---|
| | | | **Jitter** | **Delay** | **Packet loss rate** | **Jitter** | **Delay** | **Packet loss rate** |
| Shenzhen-> Beij ing | 100% | 4 .35 | 1. 0ms | 5. 0ms | 0.1 % | 1 .0ms | 4. 9ms | 0.1 % |
| Shenzhen->Guan gzhou | 95% | 4 .20 | 1. 2ms | 16 .0ms | 0.5 % | 1 .2ms | 10 .0ms | 0.5 % |
| Shenzhen->Shang hai | 90% | 4 .03 | 1. 1ms | 14 .0ms | 0.6 % | 1 .1ms | 15 .0ms | 0.7 % |
| Shenzhen->Xi'an | 85% | 3 .75 | 1. 1ms | 14 .0ms | 0.8 % | 1 .1ms | 16 .0ms | 0.8 % |
| Shenzhen->Wuha n | 82% | 3 .65 | 1. 5ms | 16 .0ms | 0.9 % | 1 .5ms | 18 .0ms | 1.2 % |

According to the embodiment of the present invention, actual services are simulated for the measurement of service quality instead of only the network quality. An apparatus for monitoring service quality is embedded in a network element of a core network to execute related monitoring operations and therefore no new monitoring device is required, which avoids security risks and reduces the cost of maintenance. Furthermore, actual service paths are monitored instead of paths between the newly-introduced monitoring device and the destination ends, so as to guarantee the accuracy of monitoring. Using reserved MSRNs as dialing test numbers may also reduce the workload. The apparatus for monitoring service quality generates call service packets actively to implement active monitoring and failure pre-alert mechanism. The method in the embodiment of the present invention is not limited to a private protocol and may be implemented through a general protocol, thereby avoiding the limited application caused by the private protocol. By reporting service quality to the network management system, uniform management is facilitated.

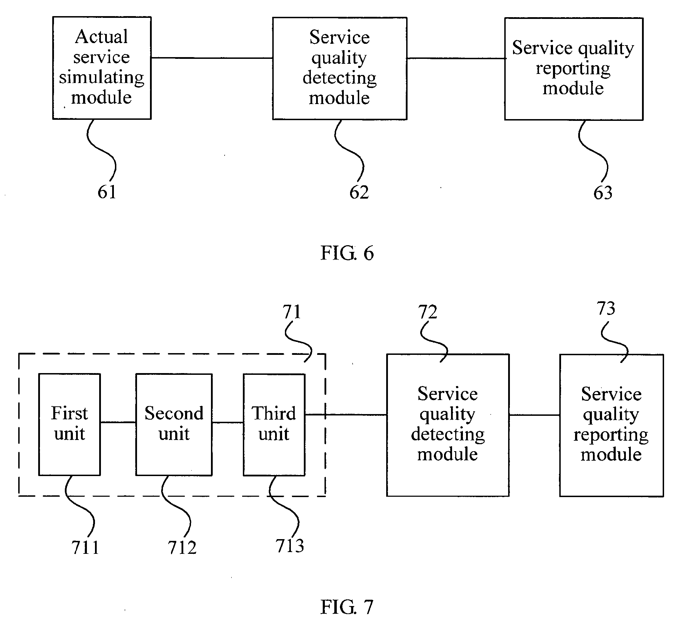

FIG. 6 is a schematic structural diagram of an apparatus according to a third embodiment of the present invention. The apparatus includes an actual service simulating module 61, a service quality detecting module 62, and a service quality reporting module 63. The actual service simulating module 61 is configured to receive a dialing test number list sent by a network management system, and perform interaction of simulating an actual service with a destination end corresponding to a dialing test number in the dialing test number list. The service quality detecting module 62 is configured to detect service quality when a service packet of the simulated actual service is transmitted. The service quality reporting module 63 is configured to send the service quality to the network management system.

The apparatus in the embodiment of the present invention may be embedded in a network element of a core network. The dialing test numbers in the embodiment may be reserved MSRNs.

According to the embodiment of the present invention, actual services are simulated for the measurement of service quality instead of only the network quality. Performing interaction of simulating an actual service with the destination end may enable active service quality measurement and play a role of pre-alert. Further, the apparatus for monitoring service quality is embedded in a network element of a core network to execute related monitoring operations and therefore no new monitoring device is required, which avoids security risks and reduces the cost of maintenance. In addition, actual service paths are monitored instead of paths between the newly-introduced monitoring device and the destination ends, so as to guarantee the accuracy of monitoring. Using reserved MSRNs as dialing test numbers may also reduce the workload.

FIG. 7 is a schematic structural diagram of an apparatus according to a fourth embodiment of the present invention. The apparatus may be embedded in a network element of a core network and includes an actual service simulating module 71, a service quality detecting module 72, and a service quality reporting module 73.

In the embodiment, the actual service simulating module 71 includes a first unit 711, a second unit 712, and a third unit 713. The first unit 711 is configured to set up a signaling connection with a destination end corresponding to a dialing test number in the dialing test number list. The second unit 712 is configured to set up a service bearer with the destination end after the signaling connection is successfully set up. The third unit 713 is configured to exchange service packets with the destination end over the service bearer.

The service quality detecting module 72 is specifically configured to generate a first service packet, and send the first service packet to the destination end over the service bearer so as to enable the destination end to obtain first network impairment information when the first service packet is transmitted over the service bearer after receiving the first service packet and to calculate first service quality in the direction from the apparatus to the destination end according to the first network impairment information; and obtain the first service quality from the destination end through RTCP. The service quality reporting module 73 is specifically configured to send the first service quality to the network management system.

Or, the service quality detecting module 72 is specifically configured to receive a second service packet generated by the destination end and sent by the destination end over the service bearer, obtain second network impairment information when the second service packet is transmitted over the service bearer after receiving the second service packet, and calculate second service quality in the direction from the destination end to the apparatus according to the second network impairment information. The service quality reporting module 73 is specifically configured to send the second service quality to the network management system.

According to the embodiment of the present invention, actual services are simulated for the measurement of service quality instead of only the network quality. As the apparatus for monitoring service quality is embedded in a network element of a core network to execute related monitoring operations, no new monitoring device is required, which avoids security risks and reduces the cost of maintenance. Furthermore, actual service paths are monitored instead of paths between the newly-introduced monitoring device and the destination ends, so as to guarantee the accuracy of monitoring. Using reserved MSRNs as dialing test numbers may also reduce the workload. In the embodiment of the present invention, a MGW generates call service packets to implement active monitoring and failure pre-alert mechanism. The method in the embodiment of the present invention is not limited to a private protocol and may be implemented through a general protocol, thereby avoiding the limited application caused by the private protocol.

To sum up, because all end offices in the network have MSRNs, in the embodiments of the present invention, using reserved MSRNs as dialing test numbers may implement entire-network addressing without the need of additional routing and addressing configuration, which reduces the workload. The operations in the embodiments of the present invention are performed by using public protocols so that the method in the embodiments of the present invention is more universally applicable. The adoption of RTCP may differentiate the sending direction from the receiving direction. As no additional external monitoring device is required, the cost of equipment may be reduced and the security may be increased. The method in the embodiments of the present invention is an active monitoring method which may find problems in the bearer network in advance and play a role of pre-alert. In the embodiments of the present invention, actual services are simulated and therefore what is measured is the service quality instead of only the network quality, which meets the needs of service detecting. It is understandable that the embodiments of the present invention are applicable to not only speech services but also other services over IP bearer networks, such as video telephony and IP Television (IPTV).

Those of ordinary skill in the art may understand that all or part of the steps in the method embodiments of the present invention may be implemented by a program instructing relevant hardware. The program may be stored in a computer readable storage medium and when the program is executed, the steps in the method embodiments of the present invention are executed. The storage medium may be any medium that may store program codes, such as a read-only memory (ROM), a random access memory (RAM), a magnetic disk, or an optical disk.

Finally, it should be noted that although the present invention has been described in detail through some exemplary embodiments, the invention is not limited to such embodiments. The invention is intended to cover the modifications and variations provided that they fall within the protection scope defined by the claims or their equivalents.

## Claims

1. A method for monitoring service quality, comprising:
receiving (11) a dialing test number list sent by a network management system and performing interaction of simulating an actual service with a destination end corresponding to a dialing test number in the dialing test number list;
detecting (12) service quality when a service packet of the simulated actual service is transmitted; and
sending (13) the service quality to the network management system;
wherein the performing the interaction of simulating the actual service with the destination end corresponding to the dialing test number in the dialing test number list comprises:
setting up (21) a signaling connection with the destination end corresponding to the dialing test number in the dialing test number list;
setting up (21) a service bearer with the destination end after the signaling connection is successfully set up; and
exchanging service packets with the destination end over the service bearer;
wherein the detecting the service quality when the service packet of the simulated actual service is transmitted comprises:
generating (22) a first service packet and sending the first service packet to the destination end over the service bearer so as to enable the destination end to obtain first network impairment information when the first service packet is transmitted over the service bearer after receiving the first service packet and to calculate first service quality according to the first network impairment information;
obtaining the first service quality from the destination end through Real-time Transport Control Protocol (RTCP); and
receiving (32) a second service packet generated by the destination end and sent by the destination end over the service bearer;
obtaining second network impairment information when the second service packet is transmitted over the service bearer after receiving the second service packet, and calculating second service quality according to the second network impairment information;
and wherein the sending (13) the service quality to the network management system comprises:
sending the first service quality and the second service quality to the network management system.

2. The method according to claim 1, wherein the dialing test number is a reserved Mobile Station Roaming Number (MSRN).

3. An apparatus for monitoring service quality, comprising:
an actual service simulating module(61, 71), configured to receive a dialing test number list sent by a network management system and perform interaction of simulating an actual service with a destination end corresponding to a dialing test number in the dialing test number list;
a service quality detecting module (62, 72), configured to detect service quality when a service packet of the simulated actual service is transmitted; and
a service quality reporting module (63, 73), configured to send the service quality to the network management system;
wherein the actual service simulating module (61, 71) comprises:
a first unit (711), configured to set up a signaling connection with the destination end corresponding to the dialing test number in the dialing test number list;
a second unit (712), configured to set up a service bearer with the destination end after the signaling connection is successfully set up; and
a third unit (713), configured to exchange service packets with the destination end over the service bearer;
wherein the service quality detecting module (62, 72) is configured to
generate a first service packet, and send the first service packet to the destination end over the service bearer so as to enable the destination end to obtain first network impairment information when the first service packet is transmitted over the service bearer after receiving the first service packet and to calculate first service quality according to the first network impairment information; and obtain the first service quality from the destination end through Real-time Transport Control Protocol (RTCP);
receive a second service packet generated by the destination end and sent by the destination end over the service bearer, obtain second network impairment information when the second service packet is transmitted over the service bearer after receiving the second service packet, and calculate second service quality in a direction from the destination end to the apparatus according to the second network impairment information;
and wherein the service quality reporting module (63, 73) is configured to send the first and second service quality to the network management system.

4. The apparatus according to claim 3, wherein the apparatus is embedded in a network element of a core network.

## Patentansprüche

1. Verfahren zum Überwachen der Dienstgüte, umfassend:
Empfangen (11) einer von einem Netzverwaltungssystem gesendeten Wähltest-Nummernliste und Durchführen von Interaktion des Simulierens eines tatsächlichen Dienstes mit einem Zielende, das einer Wähltest-Nummer in der Wähltest-Nummernliste entspricht;
Detektieren (12) der Dienstgüte, wenn ein Dienstpaket des simulierten tatsächlichen Dienstes übertragen wird; und
Senden (13) der Dienstgüte zu dem Netzverwaltungssystem;
wobei das Durchführen der Interaktion des Simulierens des tatsächlichen Dienstes mit dem Zielende, das der Wähltest-Nummer in der Wähltest-Nummernliste entspricht, Folgendes umfasst:
Aufbauen (21) einer Signalisierungsverbindung mit dem Zielende, das der Wähltest-Nummer in der Wähltest-Nummernliste entspricht;
Aufbauen (21) eines Dienstträgers mit dem Zielende, nachdem die Signalisierungsverbindung erfolgreich aufgebaut ist; und
Austauschen von Dienstpaketen mit dem Zielende über dem Dienstträger;
wobei das Detektieren der Dienstgüte, wenn das Dienstpaket des simulierten tatsächlichen Dienstes übertragen wird, Folgendes umfasst:
Erzeugen (22) eines ersten Dienstpakets und Senden des ersten Dienstpakets zu dem Zielende über den Dienstträger, um so dem Zielende zu ermöglichen, erste Netzbeeinträchtigungsinformationen zu erhalten, wenn das erste Dienstpaket über den Dienstträger übertragen wird, nachdem das erste Dienstpaket empfangen wird, und eine erste Dienstgüte gemäß den ersten Netzbeeinträchtigungsinformationen zu berechnen;
Erhalten der ersten Dienstgüte von dem Zielende durch das "Real-time Transport Control Protocol" RTCP; und
Empfangen (32) eines zweiten Dienstpakets, das durch das Zielende erzeugt und von dem Zielende über den Dienstträger gesendet wird;
Erhalten von zweiten Netzbeeinträchtigungsinformationen, wenn das zweite Dienstpaket über den Dienstträger übertragen wird, nachdem das zweite Dienstpaket empfangen wird, und Berechnen einer zweiten Dienstgüte gemäß den zweiten Netzbeeinträchtigungsinformationen;
und wobei das Senden (13) der Dienstgüte zu dem Netzverwaltungssystem Folgendes umfasst:
Senden der ersten Dienstgüte und der zweiten Dienstgüte zu dem Netzverwaltungssystem.

2. Verfahren nach Anspruch 1, wobei die Wähltest-Nummer eine reservierte "Mobile Station Roaming Number" MSRN ist.

3. Vorrichtung zum Überwachen der Dienstgüte, umfassend:
ein Modul (61, 71) zum Simulieren des tatsächlichen Dienstes, ausgelegt zum Empfangen einer von einem Netzverwaltungssystem gesendeten Wähltest-Nummernliste und Durchführen von Interaktion des Simulierens eines tatsächlichen Dienstes mit einem Zielende, das einer Wähltest-Nummer in der Wähltest-Nummernliste entspricht;
ein Dienstgüte-Detektionsmodul (62, 72), ausgelegt zum Detektieren der Dienstgüte, wenn ein Dienstpaket des simulierten tatsächlichen Dienstes übertragen wird; und
ein Dienstgüte-Meldemodul (63, 73), ausgelegt zum Senden der Dienstgüte zu dem Netzverwaltungssystem;
wobei das Modul (61, 71) zum Simulieren des tatsächlichen Dienstes Folgendes umfasst:
eine erste Einheit (711), ausgelegt zum Aufbauen einer Signalisierungsverbindung mit dem Zielende, das der Wähltest-Nummer in der Wähltest-Nummernliste entspricht;
eine zweite Einheit (712), ausgelegt zum Aufbauen eines Dienstträgers mit dem Zielende, nachdem die Signalisierungsverbindung erfolgreich aufgebaut ist; und
eine dritte Einheit (713), ausgelegt zum Austauschen von Dienstpaketen mit dem Zielende über dem Dienstträger;
wobei das Dienstgüte-Detektionsmodul (62, 72) ausgelegt ist zum Erzeugen eines ersten Dienstpakets und Senden des ersten Dienstpakets zu dem Zielende über den Dienstträger, um so dem Zielende zu ermöglichen, erste Netzbeeinträchtigungsinformationen zu erhalten, wenn das erste Dienstpaket über den Dienstträger übertragen wird, nachdem das erste Dienstpaket empfangen wird, und eine erste Dienstgüte gemäß den ersten Netzbeeinträchtigungsinformationen zu berechnen; und Erhalten der ersten Dienstgüte von dem Zielende durch das "Real-time Transport Control Protocol" RTCP;
Empfangen eines zweiten Dienstpakets, das durch das Zielende erzeugt und von dem Zielende über den Dienstträger gesendet wird, Erhalten von zweiten Netzbeeinträchtigungsinformationen, wenn das zweite Dienstpaket über den Dienstträger übertragen wird, nachdem das zweite Dienstpaket empfangen wird, und Berechnen einer zweiten Dienstgüte gemäß den zweiten Netzbeeinträchtigungsinformationen in einer Richtung vom Zielende zur Vorrichtung;
und wobei das Dienstgüte-Meldemodul (63, 73) ausgelegt ist zum:
Senden der ersten Dienstgüte und der zweiten Dienstgüte zu dem Netzverwaltungssystem.

4. Vorrichtung nach Anspruch 3, wobei die Vorrichtung in ein Netzelement eines Kernnetzes eingebettet ist.

## Revendications

1. Procédé de contrôle de la qualité de service, comprenant :
la réception (11) d'une liste de numéros de test de numérotation envoyée par un système de gestion de réseau et l'exécution d'une interaction de simulation d'un service effectif avec une extrémité destinataire correspondant à un numéro de test de numérotation dans la liste de numéros de test de numérotation ;
la détection (12) d'une qualité de service quand un paquet de service du service effectif simulé est transmis ; et
l'envoi (13) de la qualité de service au système de gestion de réseau ;
dans lequel l'exécution de l'interaction de simulation du service effectif avec l'extrémité destinataire correspondant au numéro de test de numérotation dans la liste de numéros de test de numérotation comprend :
l'établissement (21) d'une connexion de signalisation avec l'extrémité destinataire correspondant au numéro de test de numérotation dans la liste de numéros de test de numérotation ;
l'établissement (21) d'un support de service avec l'extrémité destinataire après l'établissement réussi de la connexion de signalisation ; et
l'échange de paquets de service avec l'extrémité destinataire sur le support de service ;
dans lequel la détection de la qualité de service quand le paquet de service du service effectif simulé est transmis comprend :
la génération (22) d'un premier paquet de service et l'envoi du premier paquet de service à l'extrémité destinataire sur le support de service de manière à permettre à l'extrémité destinataire d'obtenir des premières informations de dégradation de réseau quand le premier paquet de service est transmis sur le support de service après la réception du premier paquet de service et de calculer une première qualité de service en fonction des premières informations de dégradation de réseau ;
l'obtention de la première qualité de service depuis l'extrémité destinataire par le biais d'un Protocole de Commande de Transport en Temps Réel (RTCP) ; et
la réception (32) d'un second paquet de service généré par l'extrémité destinataire et envoyé par l'extrémité destinataire sur le support de service ;
l'obtention de secondes informations de dégradation de réseau quand le second paquet de service est transmis sur le support de service après la réception du second paquet de service, et le calcul d'une seconde qualité de service en fonction des secondes informations de dégradation de réseau ;
et dans lequel l'envoi (13) de la qualité de service au système de gestion de réseau comprend :
l'envoi de la première qualité de service et de la seconde qualité de service au système de gestion de réseau.

2. Procédé selon la revendication 1, dans lequel le numéro de test de numérotation est un Numéro Itinérant de Station Mobile (MSRN) réservé.

3. Appareil de contrôle de la qualité de service, comprenant :
un module de simulation de service effectif (61, 71), configuré pour recevoir une liste de numéros de test de numérotation envoyée par un système de gestion de réseau et exécuter une interaction de simulation d'un service effectif avec une extrémité destinataire correspondant à un numéro de test de numérotation dans la liste de numéros de test de numérotation ;
un module de détection de qualité de service (62, 72), configuré pour détecter une qualité de service quand un paquet de service du service effectif simulé est transmis ; et
un module de signalisation de qualité de service (63, 73), configuré pour envoyer la qualité de service au système de gestion de réseau ;
dans lequel le module de simulation de service effectif (61, 71) comprend :
une première unité (711), configurée pour établir une connexion de signalisation avec l'extrémité destinataire correspondant au numéro de test de numérotation dans la liste de numéros de test de numérotation ;
une deuxième unité (712), configurée pour établir un support de service avec l'extrémité destinataire après l'établissement réussi de la connexion de signalisation ; et
une troisième unité (713), configurée pour échanger des paquets de service avec l'extrémité destinataire sur le support de service ;
dans lequel le module de détection de qualité de service (62, 72) est configuré pour générer un premier paquet de service, et envoyer le premier paquet de service à l'extrémité destinataire sur le support de service de manière à permettre à l'extrémité destinataire d'obtenir des premières informations de dégradation de réseau quand le premier paquet de service est transmis sur le support de service après la réception du premier paquet de service et de calculer une première qualité de service en fonction des premières informations de dégradation de réseau ; et obtenir la première qualité de service depuis l'extrémité destinataire par le biais d'un Protocole de Commande de Transport en Temps Réel (RTCP) ;
recevoir un second paquet de service généré par l'extrémité destinataire et envoyé par l'extrémité destinataire sur le support de service, obtenir des secondes informations de dégradation de réseau quand le second paquet de service est transmis sur le support de service après la réception du second paquet de service, et calculer une seconde qualité de service dans une direction de l'extrémité destinataire à l'appareil en fonction des secondes informations de dégradation de réseau ;
et dans lequel le module de signalisation de qualité de service (63, 73) est configuré pour envoyer les première et seconde qualités de service au système de gestion de réseau.

4. Appareil selon la revendication 3, l'appareil étant mis en oeuvre dans un élément de réseau d'un réseau coeur.
